# EUROPÄISCHE PATENTSCHRIFT

(11) **EP 2 189 058 B1**
(45) Veröffentlichungstag und Bekanntmachung des Hinweises auf die Patenterteilung: **18.06.2014**
(21) Anmeldenummer: 09176602.2
(22) Anmeldetag: 20.11.2009
(51) Int. Cl.: A01K 5/00

(54) **Quer zur Fahrtrichtung verschiebbare Entladevorrichtung eines Futtermischwagens sowie ein Förderband zum Ausbringen und Verteilen von Viehfutter**
Unloading device of a feed mixing car which can be moved transverse to the driving direction and a conveyor belt for taking out and distributing cattle feed
Dispositif de déchargement coulissant de manière oblique par rapport à la direction de circulation d'un wagon de mélange de fourrage et une bande de transport pour sortir et répartir le fourrage

(30) Priorität: 20.11.2008 DE 202008015432 U; 13.06.2009 DE 202009008184 U; 24.02.2009 DE 202009002607 U
(43) Veröffentlichungstag der Anmeldung: 26.05.2010
(73) Patentinhaber: B. Strautmann & Söhne GmbH & Co. KG, 49196 Bad Laer (DE)
(72) Erfinder: Bolte, Hubert, 49326 Melle (DE); Uhlemann, Ernst, 49326 Melle (DE)
(74) Vertreter: Dantz, Jan Henning

(56) Entgegenhaltungen:
- EP-A1- 1 080 635
- US-A- 4 088 272

## Beschreibung

Die vorliegende Erfindung betrifft. eine quer zur Fahrtrichtung verschiebbare Entladevorrichtung eines Futtermischwagens in der Ausgestaltung nach dem Oberbegriff des Anspruchs 1.

Entladevorrichtungen dieser Art sind an Futtermischwagen, die vorzugsweise mit einem mit vertikalen Mischschnecken versehenen Mischwerk ausgestattet sind, bekannt. Sie besitzen einen auf halber Länge geteilten, um eine Achse schwenkbaren Schubrahmen, dessen jeweilige Hälfte nach dem Verschieben zur Abladeseite, aus waagerechter Lage, bis zur Erreichung der Abwurfhöhe schräg gestellt wird.

Bei Transportfahrten befindet sich die Entladevorrichtung mit waagerechten Schubrahmenhälften in einer Mittelstellung, ihre Bauteile ragen über die seitlichen Konturen des Futtermischwagens nicht offensichtlich hinaus.

Das Ausbringen von Futter in Futtergängen oder in niedrige Futtertröge erfolgt aus der Mittelstellung.

Für die Futterabgabe in höhere Futtertröge und die dadurch erforderliche Schrägstellung einer Schubrahmenhälfte, bei gleichzeitiger Verschiebung der Entladevorrichtung zur Abladeseite hin, treten wegen mangelnder seitlicher Führung, auf der am Mischbehälter anliegenden Seitenwand, beim Hochfördern durch herunterfallendes Fördergut Futterverluste und Verunreinigungen im Futtergang auf.

Nach der Patentanmeldung EP 1080635 ist eine ähnliche Ausführung bekannt, nach welcher die Austragung von Futter in höher liegende Futtertröge mittels eines verschwenkbaren, kreisbogenförmigen Förderbandes vorgesehen ist. Neben der teuren Fertigung der bogenförmigen Führung des Förderbandes und dessen Tragrahmen, ist es nachteilig, dass beidseitig über die Seiten des in Endstellung hoch gestellten Förderbandes, wegen mangelnder Seitenführung, Futter vom Förderband abfallen kann. Die Futterablage in Futtergänge oder niedrige Futtertröge ist nur aus der dann relativ hohen Abwurfposition des Förderbandes möglich, was zu unerwünscht breiten Ablageschwaden führt.

Die vorliegende Erfindung hat sich die Aufgabe gestellt, die vorgenannten Mängel zu beseitigen.

Die Erfindung löst diese Aufgabe durch eine Entladevorrichtung mit den Merkmalen des Anspruches 1.

An Beispielen wird die Erfindung nachstehend beschrieben und in den Zeichnungen dargestellt.

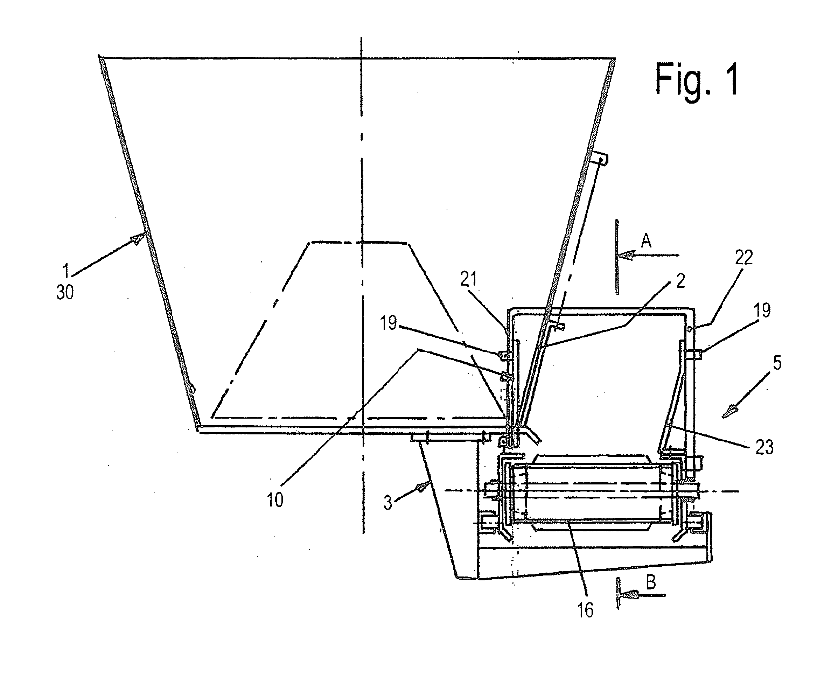

- Fig. 1: zeigt die Seitenansicht der Anbringung der Entnahmevorrichtung am Mischbehälter eines Futtermischwagens, welche nicht Teil der Erfindung ist.

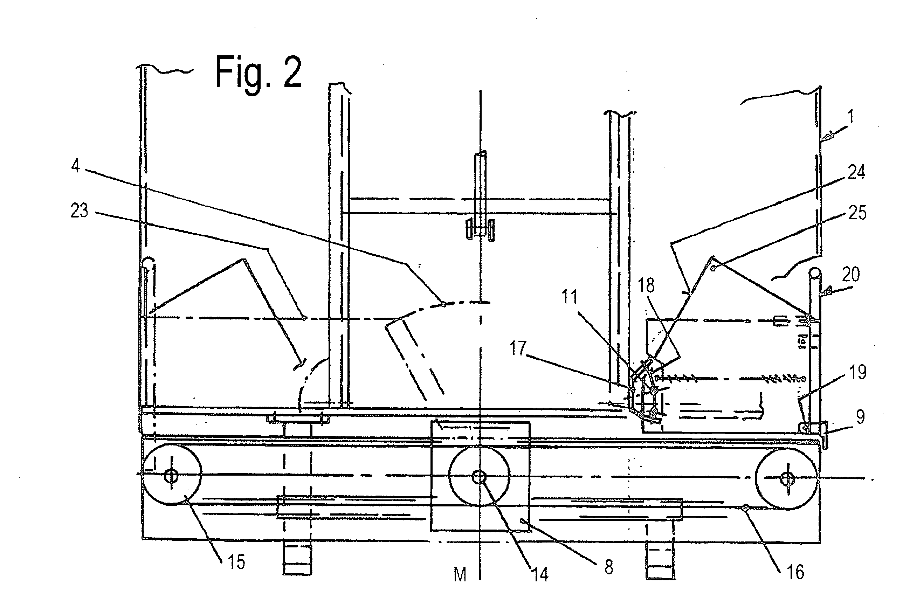

- Fig. 2: zeigt eine Ansicht der Entnahmevorrichtung in Mittelstellung nach 1 (Schnitt A-B), welche nicht Teil der Erfindung ist.

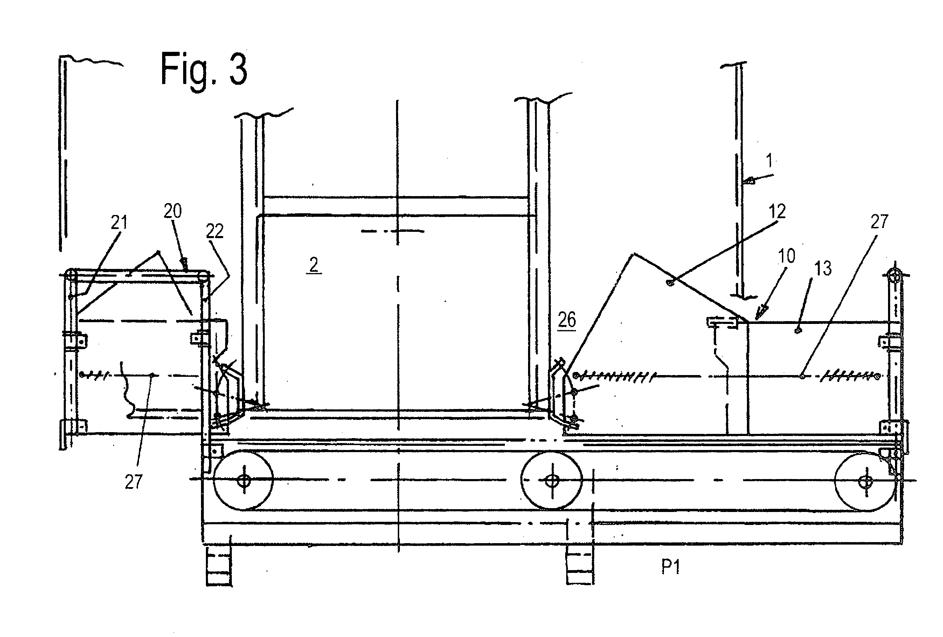

- Fig. 3: zeigt eine Ansicht entsprechend 2 mit zur Seite verschobener Entnahmevorrichtung, welche nicht Teil der Erfindung ist.

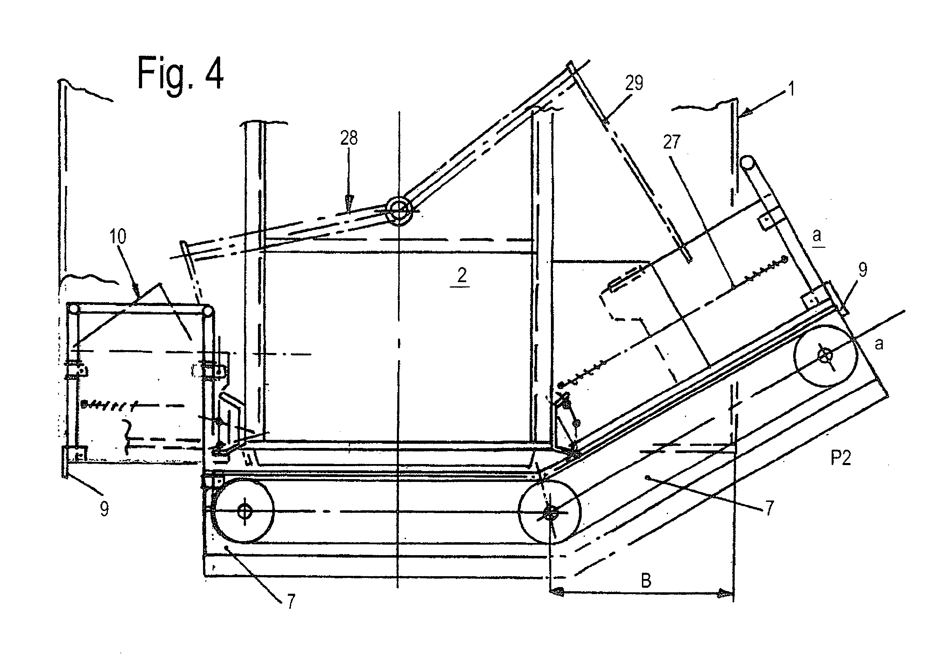

- Fig. 4: zeigt eine Ansicht entsprechend 3 mit schräg ansteigender Schubrahmenhälfte, welche nicht Teil der Erfindung ist.

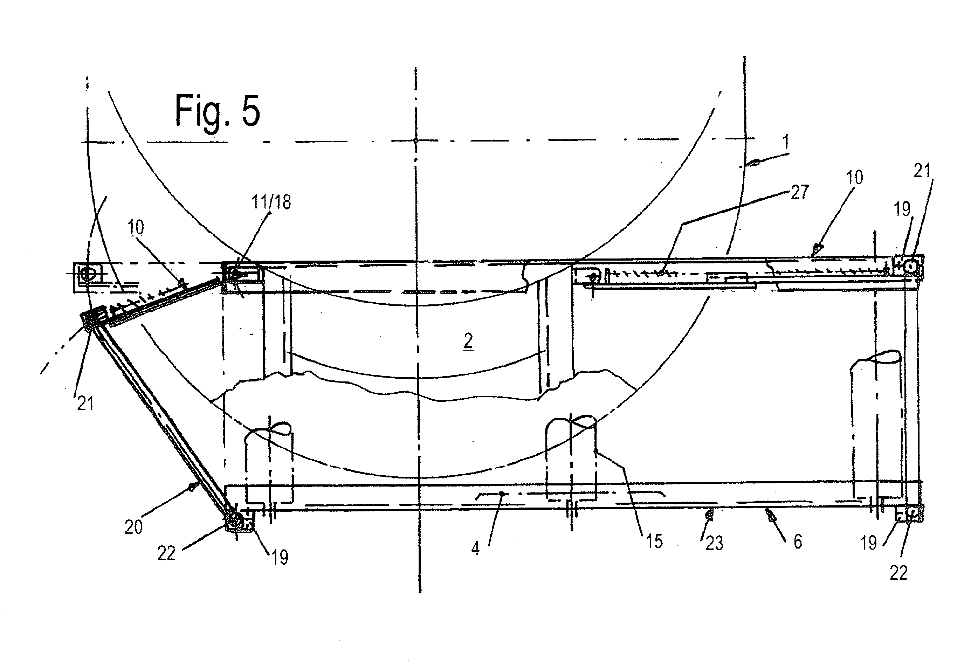

- Fig. 5: zeigt die Draufsicht zu 4, welche nicht Teil der Erfindung ist.

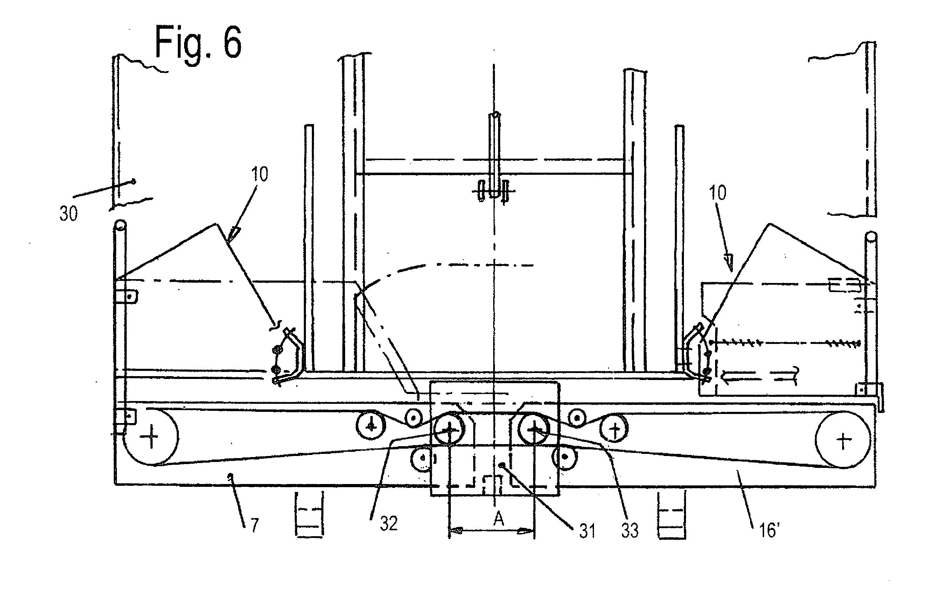

- Fig. 6: zeigt eine Anpassung der Entladevorrichtung an unterschiedliche Mischbehälterbreiten in Mittelstellung.

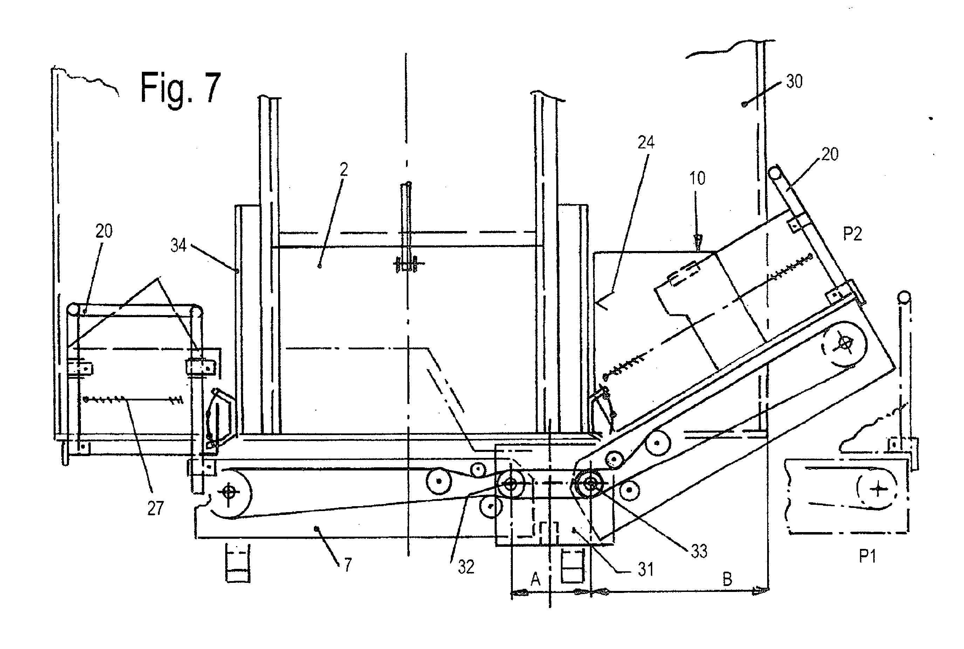

- Fig. 7: zeigt eine Ausführung nach 6 in seitlicher Abladestellung.

Am Mischbehälter 1 eines nicht näher dargestellten Futtermischwagens ist unterhalb der Auswurföffnung 2 eine Entladevorrichtung 5 angeordnet, die von einem am Futtermischwagen befestigten, starren Tragrahmen 3 in bekannter Weise geführt und getragen wird.

Die Entladevorrichtung 5 besteht im Wesentlichen aus einem Schubrahmen 6 der in Schubrahmenhälften 7 unterteilt ist, welche um eine Achse 14 verschwenkbar angeordnet sind und an ihren äusseren Enden Walzen oder Räder 15 tragen, die von einem endlosen Förderband 16, dessen Seitenränder mit Zahnriemen besetzt sind und über nicht näher dargestellte Rollen geführt werden, umlaufen wird. Die Achse 14 ist in einem Mittelstück 8 gelagert, welches am Gestell des Schubrahmens 6 gelagert ist.

Beidseitig neben dem Förderband 16 sind Seitenwände 10 und 23 den Schubrahmenhälften 7 zugeordnet, wobei die Seitenwände 10 an der dem Mischbehälter 1 nahe liegenden Seite teleskopartig ausgebildet sind.

Die gegenüberliegenden Seitenwände 23 sind in bekannter Weise fest an den Seitenträgem der Schubrahmenhälften 7 angebracht, ein Schild 4 vermeidet im mittleren Bereich Futterverluste.

Wird kein Futter ausgetragen, z. B. bei der Befüllung oder beim Transport, befindet sich die Entladevorrichtung in Mittelstellung M.

Zum Ausbringen von Futter in Futtergängen oder in niedrige Futtertröge, verbleibt die Entladevorrichtung 5 in der Mittelstellung M.

Da die Entladevorrichtung 5 im Wesentlichen spiegelbildlich um die Achse 14 schwenkbar aufgebaut ist und die Futterausbringung in erhöhte Futtertröge nach beiden Seiten unter entsprechend gleichen Voraussetzungen erfolgt, wird nur die Verschiebung zu einer Seite hin beschrieben und in den Zeichnungen dargestellt.

Die Entladevorrichtung 5 wird zur Abladeseite, bis in die Position P1 verschoben. Hierzu verlängert sich die zweiteilige, teleskopartige Seitenwand 10, die aus den ineinander geführten Platten 12 und 13 besteht, wobei die Platte 12 mit ihren Lageraugen 11 am aus Rundstahl bestehenden Bogen 18 eines Halters 17, der fest am Mischbehälter 1 angebracht ist, auf, ab und seitlich schwenkbar verbunden ist. Die Platte 13 ist am äusseren Ende mit Lagern 19 ausgestattet, in denen sie am Schenkel 21 eines Bügels 20, von welchem sie getragen wird, schwenkbar gelagert ist. Der weitere Schenkel 22 des Bügels 20 ist in Lagern 19 verschwenkbar, am Ende der Schubrahmenhälfte 7 und an der darauf feststehenden Seitenwand 23 angeordnet.

Um auf die notwendige Abwurfhöhe zu gelangen, wird die Schubrahmenhälfte 7 aus der Position P1 in die Position P2 hochgestellt. Hierbei werden die Platten 12 und 13 wieder teilweise ineinander verschoben, die Platte 12 wird am Bogen 18 entlang geführt und die Kante 24 gelangt bis in die unmittelbare Nähe der Auswurföffnung 2. Die in Position M bzw. P1 vorhandene Lücke 26 ist damit geschlossen.

Das Verlängern der Seitenwand 10 erfolgt über einen Anschlag 9, der an der Platte 13 befestigt ist und beim Verschieben des Schubrahmens 6 von dessen Stirnseite mitgenommen wird. Die Rückstellung erfolgt über eine Zugfeder 27.

Durch die Spitze 25 an der Platte 12 wird die Kante 24 so weit verlängert, dass sie etwa die gesamte Höhe der Auswurföffnung 2 abdeckt und ausquellendes, zur Seite drängendes Mischgut am Entweichen hindert.

Befindet sich die Entladevorrichtung 1 in Position P1 oder P2, ist der Schubrahmen 6 so weit verschoben, dass sich das gegenüberliegende Ende in der Nähe der Auswurföffnung 2 befindet.

Die Seitenwand 10 kann in der Mittelstellung M nicht weiter zusammengeschoben werden. Um dennoch die Verschiebung in die Positionen P1 und P2 vornehmen zu können, ist sie an einem Ende, seitlich um eine vertikale Achse am Bogen 18 und am anderen Ende um den Schenkel 21 des sie tragenden Bügels 20, schwenkbar angebracht.

Der am Schubrahmen 6 gelagerte Schenkel 22 des Bügels 20 zieht beim Verschieben in Richtung der Positionen P1 und P2 die Seitenwand 10 in Schrägstellung a und veranlasst, dass die nicht mehr verkürzbare Seitenwand 10 dieses durch Schrägstellung ausgleicht.

Eine Zugfeder 27 die an einem Ende an der Platte 12 befestigt ist und am anderen Ende an der Platte 13, unterstützt die teleskopartig ineinander geführten Platten 12 und 13 bei den Verschiebungen und vermeidet ein Auseinanderfallen derselben.

Das seitliche Abfallen von Futter an der dem Mischbehälter 1 nahe liegenden Seite wird bei verschiebbaren Entladevorrichtungen 5, durch die Anbringung der teleskopartigen Seitenwände 10 bei der Ausbringung in Futtergängen und höher gelegenen Futtergängen verhindert.

Das Abfallen von Futter an der untergeschobenen Stirnseite der Entladevorrichtung 5, wird durch eine an sich bekannte Abschlussplatte 29 verhindert, die mittels einer Wippe 28 an die Position P1 und die Mittelstellung angepasst ist.

Auf die nähere Darstellung von Antriebs- und Verstellvorgängen wurde, da bekannt, verzichtet. Zur Anpassung der Entladevorrichtung an unterschiedlich breite Mischbehälter ist vorgesehen, die bereits beschriebene Ausführung für die schmalsten Baureihen der Mischbehälter 1 zu verwenden. Für breitere Mischbehälter 30 wird vorteilhaft, wegen Übernahme der relevanten Bauteile das eine Achse 14 tragende Mittelstück 8 des Schubrahmens 6 ausgetauscht und durch ein zwei Achsen 32 und 33 tragendes Mittelstück 31 ersetzt.

Der Abstand A der Achsen 32 und 33 untereinander entspricht der zu überbrückenden Breitendifferenz, die beispielsweise durch Mischbehälter unterschiedlicher Breite 1 und 30 vorgegeben sein kann, wobei die Achsen 32 und 33, um welche die Schubrahmenhälften 7 jeweils schwenken, beim Austragen von Futter in höher liegende Futtertröge, bei allen Ausführungen einen in etwa gleichen Anstand B zu den Aussenkonturen der Mischbehälter 1 und 30 aufweisen.

Die Führungswalzen bzw. -rollen des Förderbandes 16 sind in allen Ausführungen gleich gestaltet. Das jeweilige Förderband 16 bzw. 16' ist jedoch durch ein angepasstes, längeres zu ersetzen.

Wird die Auswurföffnung 2 der Mischbehälter 30 um den Abstand A verbreitert, sind die Anlageverhältnisse der Kante 24 unverändert. Bei Beibehaltung der Breite der Auswurföffnung 2 sind, um die entstehende Lücke zur Kante 24 zu schliessen, Stege 34 am Behälter 30 anzubringen.

### Bezugszeichenliste

- 1 :: Mischbehälter
- 2 :: Auswurföffnung
- 3 :: Tragrahmen
- 4 :: Schild
- 5 :: Entladevorrichtung
- 6 :: Schubrahmen
- 7 :: Schubrahmenhälfte
- 8 :: Mittelstück
- 9 :: Anschlag
- 10 :: Seitenwand
- 11 :: Lagerauge
- 12 :: Platte
- 13 :: Platte
- 14 :: Achse
- 15 :: Walzen
- 16 :: Förderband/16' Förderband
- 17 :: Halter
- 18 :: Bogen
- 19 :: Lager
- 20 :: Bügel
- 21 :: Schenkel
- 22 :: Schenkel
- 23 :: Seitenwand
- 24 :: Kante
- 25 :: Spitze
- 26 :: Lücke
- 27 :: Zugfeder
- 28 :: Wippe
- 29 :: Abschlussplatte
- 30 :: Mischbehälter (breit)
- 31 :: Mittelstück
- 32 :: Achse
- 33 :: Achse
- 34 :: Steg
- A-B :: Schnitt
- M :: Mittelstellung
- P1 :: Position
- P2 :: Position
- a :: Schrägstellung
- A :: Abstand
- B :: Abstand

## Patentansprüche

1. Quer zur Fahrtrichtung verschiebbare Entladevorrichtung (5) eines Futtermischwagens, welche unterhalb einer Auswurföffnung (2) eines Mischbehälters (1, 30) auf einem Führungsrahmen (3) verschiebbar angeordnet ist und das auszubringende Mischgut mittels eines endlosen Förderbandes (16, 16') seitlich neben dem Futtermischwagen ablegt, wobei das Förderband (16, 16') einen Schubrahmen (6) umläuft, dessen Hälften (7) um eine Achse (32, 33) verschwenkbar sind und in Mittelstellung in gestreckter Lage, nicht offensichtlich über die Aussenkonturen des Futtermischwagens hervorstehen und in dieser Lage das Mischfutter in Futtergängen oder niedrigen Futtertrögen, wahlweise links oder rechts ablegt und welche, zur Mischgutablage in erhöhte Futtertröge zur Entladeseite verschoben und die entladeseitige Schubrahmen (6), bis über die Aussenkontur des Futtermischwagens herausragend, angehoben wird, **dadurch gekennzeichnet, dass** der Schubrahmen (6) zweiteilig ist und im Mittelstück (31) des Schubrahmens (6) zwei Achsen (32 und 33) angeordnet sind, denen jeweils eine, um diese schwenkbar angeordnete Schubrahmenhälfte (7) zugeordnet ist.

## Claims

1. Unloading device (5) of a feed mixing car, which unloading device can be moved transversely to the driving direction and is arranged in a displaceable manner on a guide frame (3) below a discharge opening (2) of a mixing hopper (1, 30) and, by means of an endless conveyor belt (16, 16'), laterally deposits the mixing stock to be distributed beside the feed mixing car, the conveyor belt (16, 16') revolving around a sliding frame (6), the half-frames (7) of which are pivotable about an axle (32, 33) and, in the centre position in the extended position, do not protrude in an obvious manner beyond the outer contours of the feed mixing car, and which, in this position deposits the compound feed in feeding aisles or low-level feeding troughs, optionally to the left or the right, and which, in order to deposit the mixing stock in higher-level feeding troughs, is displaced towards the unloading side, and the sliding frame (6) on the unloading side is raised until it protrudes beyond the outer contour of the feed mixing car, **characterized in that** the sliding frame (6) is in two parts, and two axles (32 and 33) are arranged in the centre piece (31) of the sliding frame (6), one sliding half-frame (7) being in each case assigned to and pivotable about said axles.

## Revendications

1. Dispositif de déchargement (5) d'un chariot mélangeur de fourrage mobile transversalement à la direction de déplacement qui est monté mobile sur un cadre de guidage (3) au-dessous d'une ouverture d'évacuation (2) d'un réservoir mélangeur (1, 30) et les produits mélangés à extraire étant distribués latéralement à proximité du chariot mélangeur de fourrage au moyen d'une bande convoyeuse sans fin (16, 16'), cette bande convoyeuse (16, 16') entourant un châssis pousseur (6) dont les moitiés (7) sont mobiles en pivotement autour d'un axe (32, 33) et dans la position médiane à l'état déployé ne dépassant pas manifestement des contours externes du chariot mélangeur de fourrage, et, dans cet état, le fourrage mélangé (8) étant déposé sélectivement à gauche ou à droite dans des couloirs d'alimentation en fourrage ou des petites auges à fourrage, et qui sont décalées par rapport au côté de décharge pour permettre le dépôt du fourrage mélangé dans des auges surélevées, et le châssis pousseur (6) est soulevé côté décharge jusqu'à être situé au-dessus du contour externe du chariot mélangeur de fourrage,
**caractérisé en ce que**
le châssis pousseur (6) est en deux parties et, dans la partie médiane (31) du châssis de poussée (6) sont montés deux axes (32, 33) auxquels est respectivement associée une moitié (7) de châssis pousseur montée mobile en pivotement ou montée pivotant autour de celui-ci.
